# EUROPÄISCHE PATENTSCHRIFT

(11) **EP 1 869 304 B1**
(45) Veröffentlichungstag und Bekanntmachung des Hinweises auf die Patenterteilung: **06.07.2011**
(21) Anmeldenummer: 06700578.5
(22) Anmeldetag: 07.01.2006
(51) Int. Cl.: F02D 41/30, F02D 41/40, F02D 41/34, F02D 13/02, F02D 35/00, F02D 9/02, F02P 1/00

(54) **VERFAHREN UND EINE VORRICHTUNG ZUR STEUERUNG VON VERBRENNUNGSKRAFTMASCHINEN**
METHOD AND DEVICE FOR CONTROLLING INTERNAL COMBUSTION ENGINES
PROCEDE ET DISPOSITIF DE COMMANDE D'UN MOTEUR A COMBUSTION INTERNE

(30) Priorität: 11.01.2005 DE 102005044144; 11.01.2005 DE 102005001245
(43) Veröffentlichungstag der Anmeldung: 26.12.2007
(73) Patentinhaber: Mehnert, Jens, 08468 Heinsdorfergrund (DE)
(72) Erfinder: Mehnert, Jens, 08468 Heinsdorfergrund (DE)
(74) Vertreter: Findeisen, Andreas
(86) Internationale Anmeldenummer: PCT/DE2006/000011
(87) Internationale Veröffentlichungsnummer: WO 2006/074636

(56) Entgegenhaltungen:
- WO-A1-96/39575
- DE-A1- 10 050 473
- DE-A1- 19 805 009
- US-A- 5 826 563
- US-A- 5 884 603
- US-A1- 2003 062 019
- PATENT ABSTRACTS OF JAPAN Bd. 2000, Nr. 10, 17. November 2000 (2000-11-17) & JP 2000 204987 A (MITSUBISHI MOTORS CORP; MITSUBISHI AUTOMOB ENG CO LTD), 25. Juli 2000 (2000-07-25)

## Beschreibung

Der Erfindung liegt die Aufgabe zugrunde, eine sichere und emissionsarme Inbetriebnahme der Verbrennungskraftmaschine bei minimalem Kraftstoffverbrauch, insbesondere bei Kaltstart und niedrigem Ladungszustand des Akkumulators sowie innerhalb eines hybriden Antriebssystems, zu ermöglichen. Außerdem soll keine signifikante Verlängerung des Startvorgangs eintreten sowie die Leistungsaufnahme des Hilfsaggregates zum Antrieb der Verbrennungskraftmaschine während des Anlassens gesenkt werden. Zusätzlich ist von Vorteil, dass sich das Ansprechverhalten der Verbrennungskraftmaschine, welche zu einem hybriden Antriebssystems gehört, insbesondere beim schnellen Wechsel vom unbefeuerten in den befeuerten Betriebszustand gegenüber derzeitigen Lösungen verkürzt, wodurch in der Folge auch kurze Schubbetriebphasen der Verbrennungskraftmaschine zur Erzeugung und Speicherung von Energie genutzt und im Ergebnis der Kraftstoffverbrauch gesenkt werden kann. Darüber hinaus zeichnet sich die mitdrehende Verbrennungskraftmaschine innerhalb eines hybriden Antriebssystems durch eine minimale Aufnahme von kinetischer Energie aus dem Antriebsstrang während des unbefeuerten Betriebszustandes aus.

Aus dem Stand der Technik sind eine Reihe von Lösungen bekannt, welche speziell bei dem Betriebszustand "Inbetriebnahme" der Verbrennungskraftmaschine entsprechende Verfahren beschreiben und Vorrichtungen bereitstellen. Der Problembereich für den speziellen Betriebszustand "Anlassen bei nicht vorhandener Betriebstemperatur der Verbrennungskraftmaschine" (im folgenden als "Kaltstart" bezeichnet) liegt zusätzlich darin, dass kein optimaler Verbrennungsprozess stattfindet. Dadurch entsteht beim Kaltstart eine höhere Schadstoffemission in Kombination mit einem vergleichsweise deutlich höherem Kraftstoffverbrauch, da eine zusätzliche Menge Kraftstoff je Arbeitsspiel der Verbrennungskraftmaschine zugeführt werden muss. Die Ursachen dafür liegen in einer schlechteren Aufbereitung des Verbrennungsgemisches als Folge einer verminderten Aerosolbildung. Zur Verringerung dieses Effektes sind aus dem Stand der Technik eine Reihe von Maßnahmen bekannt. Aus der DE 199 41 539 C1 ist ein Verfahren zum Anlassen von direkteinspritzenden fremdgezündeten Verbrennungskraftmaschinen mit mehreren Zylinderbänken bekannt, bei dem der Startvorgang auf nur einer Zylinderbank abgewickelt wird, dass heißt, die anderen Zylinderbänke bleiben unbefeuert. In der Offenlegungsschrift DE 102 22 769 A1 wird das wechselseitige, arbeitsspielabhängige und an bestimmten Betriebsparametern der Verbrennungskraftmaschine abhängige Abschalten von Zylinderbänken dargestellt. Mit Hilfe der in der Offenlegungsschrift DE 199 57 185 A1 dargestellten Wirkungsweise erfolgt über die Definition von Lastphasen während der Aufheizphase des Katalysators (während des Kaltstarts) de facto eine Motorlastbegrenzung zur Verkürzung dieser sowie zur Verbrauchsreduktion. In der Offenlegungsschrift DE 199 39 560 A1 ist der Einsatz einer Heizvorrichtung vorgesehen, welche in Zusammenwirkung mit einer Abgasrückführung das Temperaturniveau des der Verbrennungskraftmaschine wieder zurückgeführten Abgases anhebt. Die Offenlegungsschrift DE 103 05 451 A1 2004.0729 beschreibt ein Verfahren und eine Vorrichtung, wodurch speziell der Startvorgang von Verbrennungskraftmaschinen, durch ein Temperaturmodell des Katalysators in Verbindung mit einer vorgegebenen dynamischen Verteilungsfunktion der lokalen Temperatur im Katalysatorvolumen, verbessert wird. Weitere Möglichkeiten, speziell zur Verbesserung des Kaltstarts von Verbrennungskraftmaschinen, stellen Verfahren zur Erhöhung des Drucks im Abgassystem durch Schließen von Auspuffbremsklappen oder aber auch die Kombination von Auspuffbremsklappen mit einem EGR-Ventil (Abgasrückführ-Ventil) gemäß DE 698 20 436 T2 2004.10.14 dar.

Der Antrieb von Fahrzeugen durch ein hybrides Antriebssystem, bestehend aus der Kopplung von Verbrennungs- und Elektromotor(en), führt zu einer Reihe von Verbesserungen. Beim Antrieb eines Fahrzeugs durch den Elektromotor entstehen keine direkten Schadstoffemissionen. Wird darüber hinaus bei einem hybrid angetriebenem Fahrzeug ein Teil der kinetischen Energie während der Fahrzeugverzögerung in elektrische Energie umgewandelt und in Batterien gespeichert, sinkt zusätzlich der Kraftstoffverbrauch, da diese gespeicherte Energie wieder zum Antrieb des Fahrzeuges genutzt werden kann. Ausführungsbeispiele für hybride Antriebssysteme werden beispielsweise in der europäischen Patentschrift EP 0762957B1 mit dem Ziel der Verkleinerung der Größe des Verbrennungsmotors, in der europäischen Patentschrift EP 0648635B1 mit dem Ziel eines optimalen Zusammenschaltens der Antriebsaggregate durch Zusammenführung des Reihen- und Paralleltyps oder in der europäischen Patentschrift EP 0848671B1 mit dem Ziel einer optimalen Lastverteilung zwischen der Verbrennungskraftmaschine und der Batterie zur Verbesserung des Wirkungsgrades und Verlängerung der Lebensdauer, beschrieben. Die Ausnutzung der Bremsenergie zur Batterieladung ist insbesondere in der Offenlegungsschrift DE 19958403A1 Gegenstand, wobei mit unbefeuerter Verbrennungskraftmaschine das Ziel besteht, Zuckbewegungen der Kurbelwelle aus ihrer Stillstands-Drehwinkelposition heraus zu verhindern oder zu reduzieren.

Zusammenfassend ist festzustellen, dass sich die bekannten Maßnahmen zur Kraftstoffverbrauchssenkung und Schadstoffreduktion für die betrachteten Betriebszustände und insbesondere beim Kaltstart einer Verbrennungskraftmaschine durch aufwendige technische Lösungen und meist Konzentration auf eine Zielgröße (Kraftstoffverbrauchssenkung, Schadstoffreduktion, Anlaßzeit, Mehrzylinder-Bauart) auszeichnen. Ebenfalls ist bei speziellen Verfahren auch eine deutliche Verlängerung des Start- oder Mitlaufvorgangs festzustellen, wodurch eine zusätzliche Belastung der Anlaßkomponenten (beispielsweise des Anlassers und der Akkumulatoren) eintritt. Andere derzeitige Lösungen eignen sich beispielsweise lediglich für Verbrennungskraftmaschinen mit mehreren Zylindern. Generell ist zum Stand der Technik festzustellen, dass ein hoher kurzzeitiger Strombedarf zur Überwindung der Reibungs- und innermotorischen Wiederstände notwendig ist. Insbesondere bei Kaltstart und niedrigem Ladungsniveau der Akkumulatoren sowie bei kurzzeitigen Schubbetriebsphasen führen diese hohen Widerstände zur teilweisen oder sogar vollständigen Aufhebung der getroffenen Maßnahmen zur Verringerung des Kraftstoffverbrauchs und der Schadstoffemission.

Die Aufgabe der Erfindung wird durch ein Verfahren und eine Vorrichtung gemäß den in den Ansprüchen genannten Merkmalen gelöst. Die im Rahmen der Erfindung betrachteten Betriebszustände können in "Inbetriebnahme", welcher mit dem Anlassen der Verbrennungskraftmaschine einsetzt und bis zum Zeitpunkt des Erreichens der Betriebstemperatur der Verbrennungskraftmaschine und/oder des Katalysators andauert sowie in ein Mitlaufstart-Regime und in ein Mitlaufbeendigungs-Regime, welches den Übergang der Verbrennungskraftmaschine innerhalb eines hybriden Antriebssystems vom Last- in den Schubbetrieb, wobei der Wechsel vom befeuerten in den unbefeuerten Betriebszustand (und umgekehrt) gesteuert wird, unterteilt werden. Erfindungsgemäß ist demnach vorgesehen, dass durch eine integrierte Steuereinheit Sensordaten erfasst werden, welche ein Mikroprozessor verarbeitet und im Ergebnis Sollwerte für Stellglieder bereitstellt. Erfindungsgemäß werden folgende Varianten in der integrierten Steuereinheit bereitgestellt:
(1)Startregime (Inbetriebnahme der Verbrennungskraftmaschine bei betriebswarmen Katalysator)
(2)Kaltstartregime (Inbetriebnahme der Verbrennungskraftmaschine mit Umgebungstemperatur)
(3)Aufwärmregime (Inbetriebnahme der Verbrennungskraftmaschine bei nicht betriebswarmen Katalysator)
(4)Mitlaufstart-Regime
(5)Mitlaufbeendigungs-Regime

Das Startregime (1) ist dadurch gekennzeichnet, dass unmittelbar bei Anlassen der Verbrennungskraftmaschine von einer Ausgangsdrehzahl n₀ (n₀≥0) bis zu einer Enddrehzahl n₁ (n₁>n₀) eine arbeitsspiel- und zylinderabhängige Ansteuerung eines Dekompressionsventils im Brennraum jedes Zylinders der Verbrennungskraftmaschine so erfolgt, dass keine Kompression des Zylinderinhaltes während der Kolbenbewegung vom unterem (UT) zum oberem Totpunkt (OT) sowie ebenfalls keine Entspannung des Zylinderinhaltes zwischen OT und UT einsetzt. Gleichzeitig erfolgt während dieses Startzeitraumes t_{S} (dieser repräsentiert den Zeitfortschritt von n₀ bis n₁) keine Kraftstoffzufuhr und auch keine Einleitung von Zündsignalen bei Ausführungen von Verbrennungskraftmaschinen mit Fremdzündung. Der Starter, welcher zum Anlassen der Verbrennungskraftmaschine eingesetzt wurde, wird nach dem Erreichen der Enddrehzahl n₁ von der Verbrennungsmaschine bei Bedarf entkoppelt und als Antrieb abgeschaltet. Der eigentliche Start der Verbrennungskraftmaschine, bei welchem ein Übergang vom unbefeuerten in den befeuerten Betriebszustand erfolgt, wird durch die Ausnutzung der vorhandenen Massenträgheit der beweglichen Bauteile der Verbrennungskraftmaschine (zum Beispiel Kurbelwelle, Schwungrad) vollzogen. Dabei entsteht bis zum Einsetzen eines stabilen Leerlaufs der Verbrennungskraftmaschine ein Drehzahlabfall Δn_{S} von der Enddrehzahl n₁ bis zur Leerlaufdrehzahl n_{L} (n₁>n_{L} und n₁ = Δn_{S} + n_{L}). Mit dem Erreichen der Enddrehzahl n₁ erfolgt ein arbeitsspielabhängiges und zylinderselektives Schließen der zugeordneten Dekompressionsventile der Zylinder verbunden mit dem Einstellen entsprechender Motorbetriebsparameter (beispielsweise Beginn der Kraftstoffzufuhr je Zylinder, Menge des zugeführten Kraftstoffs, Zündwinkel) zur Inbetriebnahme der Verbrennungskraftmaschine, wodurch die arbeitsspiel- und zylinderspezifische Befeuerung durch eine kennfeldgeregelte Kraftstoffzufuhr und gegebenenfalls Fremdzündung begonnen wird. Die Reihenfolge der stattfindenden Befeuerung richtet sich nach der jeweils definierten Zündreihenfolge der Verbrennungskraftmaschine und beginnt nach dem Erreichen der Enddrehzahl mit dem Zylinder, welcher zuerst den erforderlichen Verdichtungstakt mit dementsprechend angesteuerten Steuerorganen und geschlossenem Dekompressionsventil erreicht hat.

Das Kaltstartregime (2) ist dadurch gekennzeichnet, dass die Enddrehzahl um einen Drehzahlbetrag n_{D} bis zu einer Kaltstartdrehzahl n_{K} überschritten wird (n_{K}> n₁ und n_{K} = n₁ + n_{D}). Dabei erfolgt in gleicher Weise wie beim Startregime, jedoch bis zum Erreichen der Kaltstartdrehzahl, eine arbeitsspiel- und zylinderabhängige Ansteuerung des Dekompressionsventils im Brennraum jedes Zylinders der Verbrennungskraftmaschine, sodass keine Kompression des Zylinderinhaltes während der Kolbenbewegung vom unteren (UT) zum oberen Totpunkt (OT) sowie ebenfalls keine Entspannung des Zylinderinhaltes zwischen OT und UT einsetzt. Gleichzeitig erfolgt während dieses Kaltstartzeitraumes t_{K} (dieser repräsentiert den Zeitfortschritt von n₀ bis n_{K}) keine Kraftstoffzufuhr und auch keine Einleitung von Zündsignalen bei Ausführungen von Verbrennungskraftmaschinen mit Fremdzündung. Der eingestellte Drehzahlüberschuß n_{D} dient zur Vorwärmung der Verbrennungsluft und der Verbrennungsraumoberflächen der Verbrennungskraftmaschine, wofür die (oder das) folgenden Arbeitsspiele bis zum Absinken der Drehzahl auf den Wert der Enddrehzahl genutzt werden. Im Rahmen des Kaltstartregimes wird der Starter erst mit Erreichen der Kaltstartdrehzahl n_{K} von der Verbrennungskraftmaschine bei Bedarf entkoppelt und als Antrieb abgeschaltet. Gleichzeitig werden das (oder die) Dekompressionsventil(e) geschlossen. Bei Ausführungsarten von Verbrennungskraftmaschinen mit variabel ansteuerbaren Steuerungsorganen werden das (oder die) Auslaßorgan(e) ebenfalls mit den Dekompressionsventilen geschlossen, wodurch eine Kompression und anschließende Entspannung, entsprechend den Kolbenbewegungen bei den zu durchlaufenden Arbeitsspielen, der angesaugten Luft in den Zylindern erfolgt. Bei dieser speziellen Ausführungsart der Steuerorgane wird das (oder die) Einlaßorgan(e) ebenfalls nach dem jeweils erstem durchlaufenem Ansaugtakt nach dem Ereichen der Kaltstartdrehzahl zylinderselektiv geschlossen, um ein Rückströmen der verdichteten Luft beim darauffolgenden Arbeitsspiel in das Ansaugsystem zu vermeiden. Durch Absinken der Drehzahl der Verbrennungskraftmaschine wird automatisch wieder der Enddrehzahlwert n₁ erreicht. Mit dem Erreichen des Enddrehzahlwertes n₁ erfolgt die bereits beschriebene Verfahrensweise zum Starten der Verbrennungskraftmaschine entsprechend dem beschriebenem Startregime (1).

Das Aufwärmregime (3) ist durch zwei optional ausführbare Unterregime gekennzeichnet. Diese können als
(3.1) Abgasaufwärmregime und
(3.2) Verbrennungsluftvorwärmregime
bezeichnet werden. Im Rahmen des Abgasaufwärmregimes (3.1) erfolgt durch eine temperaturabhängige Schließdaueranpassung des (oder der) Auslaßorgans(e) der Verbrennungskraftmaschine während jedes Ausstoßtaktes eine Steigerung der Abgastemperatur und der Brennraumoberflächen, indem die Abgase nicht zu Beginn jedes Ausstoßtaktes ausgeschoben, sondern last- und katalysatortemperaturabhängig wieder komprimiert werden. Bei dieser Verfahrensweise besteht ein proportionales Verhalten zwischen dem Temperaturniveau der Abgase und der Schließdauerverlängerung des (oder der) Auslaßorgans(e) jedes Zylinders während des Ausstoßtaktes. Dabei gilt, je geringer das Temperaturniveau des Katalysators ist, desto näher sollte sich der Kolben während des Ausstoßtaktes am oberen Totpunkt bei Öffnung des (oder der) Auslaßorgans(e) befinden. Das bewirkt, dass sich die Öffnungsdauer des (oder der) Auslaßorgans(e) entsprechend der gewünschten Temperatursteigerung der Abgase proportional verändert und in der Folge bei einem kaltem Katalysator näher am OT liegt. Durch eine derartige Steuerung des Ausschiebezeitpunktes der Abgase kann deren Temperatur entsprechend den aktuellen Betriebsparametern der Verbrennungskraftmaschine eingestellt werden. Im Ergebnis dieser Maßnahme steigt proportional zur Schließdauerverlängerung auch die Motorlast, wodurch eine zusätzliche Erhöhung des thermischen Niveaus der Abgase eintritt. In der Folge verkürzt sich zusätzlich die Aufwärmzeit des (oder der) Katalysators(e). Mit Einstellung der Betriebstemperatur der Verbrennungskraftmaschine und/oder des (oder der) Katalysators(en) endet diese Ansteuerung des (oder der) Auslaßorgans(e) der Verbrennungskraftmaschine.

Ebenfalls ist es möglich und sinnvoll, das Abgasaufwärmregime (3.1) erfindungsgemäß in die Motorsteuerung aufzunehmen, damit auch bei Betriebszuständen außerhalb der Inbetriebnahme die Schließdauer des (oder der) Auslaßorgans(e) an das Temperaturniveau des (oder der) Katalysators(en) dynamisch angepaßt und in dessen Abhängigkeit gesteuert werden kann. Dadurch wird es möglich, das erforderliche Temperaturniveau des (oder der) Katalysators(en) zusätzlich auch während des Einsatzes der Verbrennungskraftmaschine außerhalb der erfindungsgemäßen Regime zu steuern.

Das Verbrennungsluftvorwärmregime (3.2) kann als eigenständiges Regime zur Verkürzung der Aufwärmzeit des (oder der) Katalysators(en) oder aber auch in Verbindung mit bereits beschriebenen, beispielsweise dem Abgasaufwärmregime (3.1), eingesetzt werden. Dabei wird mit Hilfe einer definierten Öffnung des (oder der) Auslaßorgans(e) jedes Zylinders während des Ansaugtaktes der Verbrennungskraftmaschine eine gezielte Zufuhr (Ansaugen) von Abgasen in den Verbrennungsraum ermöglicht. Dabei empfiehlt es sich, die jeweiligen Einlaßventile geschlossen zu halten. Auf Grund der Trägheit der Luftmassenströme ist eine Ventilüberschneidung von Auslaß schließt und Einlaß öffnet im Ansaugtakt möglich und sinnvoll. In Kombination mit dem Abgasaufwärmregime (3.1) kann dabei das Auslaßorgan auch nach Überschreiten des OT und dem dadurch vollzogenem Übergang vom Ausstoß- in den Ansaugtakt geöffnet bleiben. Mit dieser gesteuerten Rückführung von Abgasen wird eine Erhöhung des thermischen Niveaus der Frischladung im Ansaugtakt bewirkt, welche sich im Ergebnis der Vermischung von Frisch- mit Abgas automatisch einstellt. In der Folge erhöht sich das thermische Kreisprozessniveau, wodurch auch das Temperaturniveau der Abgase steigt und die Aufwärmzeit des (oder der) Katalysators(en) verkürzt werden kann. Zur Gewährleistung dieses Effektes ist neben einer Steuerdiagramm unabhängigen Ansteuerungsmöglichkeit zur zylinder- und arbeitstaktweisen Betätigung der Einlaß- und Auslaßorgane auch eine gleichzeitige und wechselseitige Ansteuerung dieser Ladungswechselorgane während des Ansaugtaktes notwendig. Die Öffnungsdauer und der Öffnungszeitpunkt des (oder der) Auslaßorgans(e) richtet sich nach einer Vielzahl von Motorbetriebsparametern entsprechend definierter Kennfeldbereiche last- und katalysatortemperaturgeführt aus. Zu diesen Parametern zählen unter anderem das aktuelle Lastniveau der Verbrennungskraftmaschine und/oder die Stellung des Fahrpedals und/oder die Katalysatortemperatur und/oder die Kühlmittel-, Kraftstoff- und/oder Ansauglufttemperatur und/oder der Drehzahl. Eine für alle Ausführungsarten von Verbrennungskraftmaschinen einheitliche Vorgabe dieser Steuerungsparameter für das (oder die) Ein- und/oder Auslaßorgans(e) ist auf Grund der sehr unterschiedlichen Gestaltungsformen nicht umsetzbar und jeweils unter Beachtung der Randbedingungen zu ermitteln und in die integrierte Steuereinheit einzubinden.

Erfindungsgemäß werden zur Sicherung einer unter allen Betriebsbedingungen der Verbrennungskraftmaschine erfolgreichen Inbetriebnahme eine Reihe von Umgebungs- und Verbrennungskraftmaschinenparametern vor Beginn des Inbetriebnahmeregims erfaßt, damit die vorzugebenden Werte für Enddrehzahl und/oder Kaltstartdrehzahl für einen sicheren Startvorgang ausreichen. Zu diesen Parametern, welche für die Bestimmung des jeweiligen Enddrehzahl- und möglicherweise Kaltstartdrehzahlwertes zu berücksichtigen sind, gehören die Verbrennungskraftmaschinen abhängige Leerlaufdrehzahl n_{L}, die Motoröltemperatur und/oder Kühlmitteltemperatur und/oder Ansauglufttemperatur (Umgebungstemperatur). Eine kombinierte Ermittlung mehrerer dieser und/oder weiterer Parameter, beispielsweise des Umgebungsluftdruckes, der Katalysatortemperatur oder der Kraftstofftemperatur, ist ebenfalls denkbar und sinnvoll. Generell besitzt die Startsicherheit Vorrang vor der Kraftstoff- und/oder Emissionsminderung, weshalb der Ladezustand des (oder der) Akkumulators(en) über die Bordnetzspannung ebenfalls berücksichtigt wird. Sowohl die End- als auch die Kaltstartdrehzahl sind somit von den jeweils ermittelten Randbedingungen und von der konkreten Ausführungsart der Verbrennungskraftmaschine abhängig und daher nicht allgemeingültig definierbar.

Gemäß einer besonders vorteilhaften Ausführung der Erfindung können auch die vorhandenen Einlaß- und/oder Auslaßorgane der Verbrennungskraftmaschine zur Steuerung der beschriebenen Startregime (1) bis (3) Anwendung finden, indem mit Öffnung der vorhandenen Einlaß- und/oder Auslaßorgane die erforderlichen Dekompressions- und/oder Kompressionsvorgänge gesteuert werden.

Das Mitlaufstart-Regime (4) steuert den Übergang der Verbrennungskraftmaschine vom Last- in den Schubbetrieb, somit den Wechsel vom befeuerten in den unbefeuerten Betriebszustand, wobei die Verbrennungskraftmaschine Bestandteil eines hybriden Antriebssystems ist. In Erwiderung auf eine Fahrpedalstellung, welche eine Beendigung der Kraftstoffzufuhr zur Verbrennungskraftmaschine signalisiert, erfolgt zunächst in Abhängigkeit vom Ladezustand der Batterien und dem eventuellem Vorliegen eines Schaltungssignals für einen Gangwechsel die Entscheidung, ob das Mitlaufstart-Regime durch die integrierte Steuereinheit aufgerufen wird. Ist dies der Fall, bleibt die Verbindung Kurbelwelle - Antriebsstrang bestehen und auch die mögliche Einstellung eines Drehzahlschlupfes zwischen Kurbelwellen- und Antriebsstrangdrehzahl an der entsprechenden Kopplungsstelle erhält die Drehzahl der Kurbelwelle auf einem gleichem oder größerem Drehzahlwert als der jeweilige Leerlauf-Drehzahlwert der Verbrennungskraftmaschine. Vielmehr führt eine Fahrpedalstellung in der Nulllage in Kombination mit dem Aktivieren des Mitlaufstart-Regimes durch die integrierte Steuereinheit dazu, dass zuerst die Kraftstoffzufuhr abgeschaltet und gegebenenfalls die Einleitung von Zündsignalen unterbunden wird. Im Anschluß werden mit Hilfe einer im Brennraum jedes Zylinders befindlichen Dekompressionseinrichtung durch Öffnung dieser im Verdichtungs- und Verbrennungstakt die arbeitsprinzipbedingten Kompressions- und Entspannungstakte unterbunden, so dass es zu keiner Kompression oder Entspannung der Ansaugluft kommt. Bei Ausführungen von Verbrennungskraftmaschinen mit variabel ansteuerbaren Steuerorganen kann die Dekompressionseinrichtung entfallen und deren Aufgabe durch eine entsprechende Ansteuerung der Steuerorgane übernommen werden. Zeitgleich erfolgt die vollständige Öffnung von eventuell vorhandenen Drosseleinrichtungen im Ansaug- und Abgassystem. Ebenfalls wird ein möglicher Turboladerbypass (Waste Gate) vollständig geöffnet. Liegt eine einlaßventilgesteuerte Ausführungsart einer Verbrennungskraftmaschine vor, so erfolgt die Ansteuerung der Öffnungszeiten der Einlaßventile in der Art, dass beim Ansaugtakt eine vollständige Öffnung beim unteren Totpunkt vorgenommen wird und das Einlaßventil erst mit Erreichen des oberen Totpunktes wieder schließt. Im Ergebnis dieser Maßnahmen führt das Mitlaufstart-Regime dazu, dass die Verbrennungskraftmaschine in einen geschleppten Betriebszustand übergeht, welcher dadurch gekennzeichnet ist, dass sich die Verbrennungskraftmaschine ohne Kompressions- und Entspannungsarbeit zu verrichten mit minimalem Energieeinsatz in Bezug auf den Ladungswechsel dreht. Zur Sicherung einer sofortigen Inbetriebnahme ist dennoch der erforderliche Luftmengendurchsatz vorhanden. Außerdem bleibt auf Grund des Mitdrehens der Verbrennungskraftmaschine der Raildruck bei entsprechenden Ausführungsformen auf einem Niveau, welches auch eine sofortige Inbetriebnahme sicherstellt. Ebenfalls wird die Rotationsbewegung des Laufzeugs eines möglicherweise vorhandenen Turboladers durch den Luftmengendurchsatz erhalten und in Folge dessen ist ein kurzfristiges Ansprechen gewährleistet. Darüber hinaus trägt die kinetische Energie der Verbrennungskraftmaschine zum Zeitpunkt der Aktivierung des Mitlaufstart-Regimes zusätzlich zur Erzeugung elektrischer Energie bei und bleibt nicht ungenutzt oder muss sogar durch zusätzlichen Aufwand abgebaut werden.

Das Mitlaufbeendigungs-Regime (5) steuert den Übergang der Verbrennungskraftmaschine vom Mitlaufstart-Regime in den befeuerten Betriebszustand, somit vom Schub- in den Lastbetrieb, wobei die Verbrennungskraftmaschine Bestandteil eines hybriden Antriebssystems ist. In Erwiderung auf eine Fahrpedalstellung, welche eine Leistungsanforderung durch Betätigung signalisiert, erfolgt zunächst eine Überprüfung, ob die angeforderte Last allein durch eine Umwandlung der in den Batterien gespeicherten elektrischen Energie in Antriebsenergie möglich und durch den Startergenerator auch umsetzbar ist. In diesem Fall kann die vorgegebene Lastanforderung ausschließlich durch den Startergenerator umgesetzt werden. Eine weitere und über die Kapazität des elektrischen Antriebsaggregates hinausgehende Lasterhöhung führt zur Inbetriebnahme der Verbrennungskraftmaschine. Dadurch erfolgt mit Überschreiten dieser Lastschwelle die Deaktivierung des Mitlaufstart-Regimes durch die integrierte Steuereinheit und gleichzeitig wird das Mitlaufbeendigungs-Regime aktiviert. Im Ergebnis werden zuerst die geöffneten Dekompressionseinrichtungen geschlossen und die Steuerorgane entsprechend der im Steuerdiagramm vorgegebenen Zeiten sowie in Abhängigkeit von der Kurbelwellenstellung angesteuert. Möglicherweise im Ansaug- und Abgassystem vorhandene Drosseleinrichtungen werden ebenso in eine entsprechende Lage eingestellt wie der Turboladerbypass (Waste Gate) bei derart ausgeführten Verbrennungskraftmaschinen. Die einzustellende Lastanforderung wird durch die Stellung des Fahrpedals und die anliegende Kurbelwellendrehzahl repräsentiert und stellt einen einzustellenden Betriebspunkt im Motorenkennfeld dar. Dieser einzustellende Betriebspunkt liefert die Werte für die einzustellenden Betriebsparameter für die Verbrennungskraftmaschine, wie Einspritzmenge und -zeitpunkt, Öffnungs- und Schließzeiten der Steuerorgane, Einstellungswinkel für Drosselelemente im Ansaug- und/oder Abgassystem, Zündzeitpunkt und/oder Stellung des Waste-Gates. Dies führt somit dazu, dass wegen der erhöhten Lastanforderung die Befeuerung mit dem Zylinder der Verbrennungskraftmaschine beginnt, welcher als erster einen dem Betriebspunkt entsprechenden Ansaugtakt durchlaufen hat und dadurch ein entsprechendes Verbrennungsluftvolumen angesaugt hat. In Analogie zur Zündfolge der Verbrennungskraftmaschine werden dann nacheinander alle weiteren Zylinder wieder befeuert, indem die integrierte Steuereinheit dem Betriebspunkt repräsentierende Betriebsparameter ansteuert. Bei Ausführungen mit Fremdzündung werden außerdem mit dem Durchlaufen der Ansaugtakte auch die Ansteuerungen für die Zündeinrichtungen aktiviert und Zündimpulse entsprechend dem Betriebspunkt durch die integrierte Steuereinheit für alle Zylinder ausgegeben. Mit dem Übergang zu einer vollständigen Befeuerung der Verbrennungskraftmaschine deaktiviert die integrierte Steuereinheit das Mitlaufbeendigungs-Regime. Die Maximaldauer, um die Verbrennungskraftmaschine durch das Mitlaufbeendigungs-Regime in den befeuerten Betriebszustand zu überführen, beträgt somit für eine nach dem Vier-Takt-Verfahren arbeitende Verbrennungskraftmaschine mit vier Zylindern maximal drei Umdrehungen der Kurbelwelle.

Die erfindungsgemäße Aufgabe wird ferner durch eine Vorrichtung gelöst, welche sich außerdem durch einen modularen und an die beschriebenen Regimevarianten (1) bis (5) angelehnten Aufbau optionaler Regimmodule auszeichnet. Vorzugsweise ist die erfindungsgemäße Vorrichtung als eine in ein vorhandenes Motorsteuergerät integrierte Steuereinheit gekennzeichnet, welche entsprechende Verarbeitungsfunktionen für Sensordaten umfaßt. Die jeweilige Regimevariante wird dabei in Abhängigkeit relevanter Motorparameter mit Hilfe eines Mikroprozessors abgerufen, wobei die Motorparameter von Sensoren permanent erfasst werden und im Anschluß durch Stelleinrichtungen in Richtung vorgegebener Sollwerte unter Nutzung der im Mikroprozessor gespeicherten Programme gesteuert. Weitere bevorzugte Ausgestaltungen der Erfindung ergeben sich aus den übrigen, in den Unteransprüchen genannten Merkmalen.

Die Erfindung wird durch folgende Abbildungen (Fig.) beispielhaft veranschaulicht. Diese zeigen:
- Fig. 1:: Prinzipdarstellung einer Verbrennungskraftmaschine mit Kraftstoffdirekteinspritzung und variablen Steuerungsorganen sowie Mitteln zur Umsetzung der Inbetriebnahmeregime.
- Fig. 2:: Schematisierte Darstellung eines hybriden Antriebssystems 1, bestehend aus einer Verbrennungskraftmaschine 2 und einem Startergenerator 30, welches zum Antrieb eines nicht dargestellten Kraftfahrzeuges bestimmt ist sowie Mitteln zur Umsetzung des Mitlaufstart- und Mitlaufbeendigungsregimes.

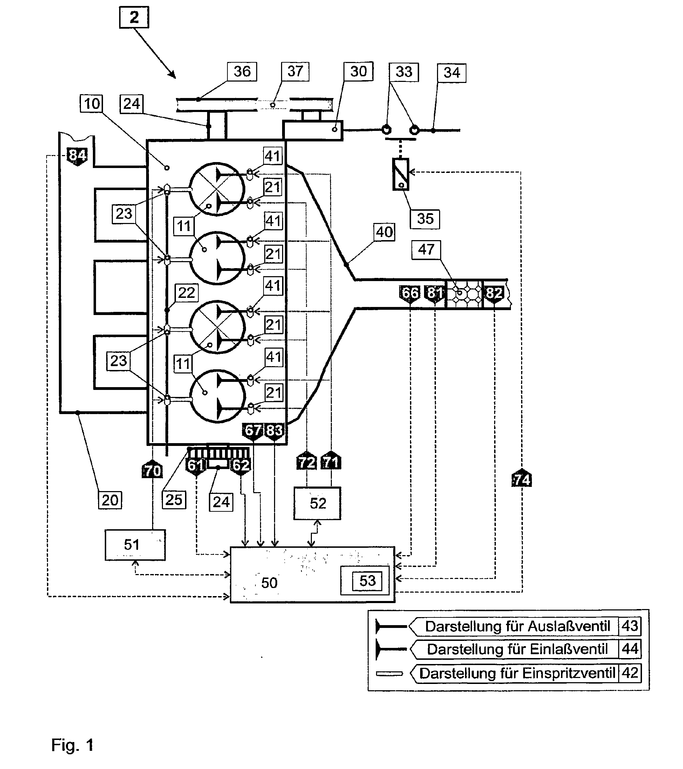

Fig. 1 zeigt in schematisierter Darstellung eine Verbrennungskraftmaschine 2, die zum Antrieb eines nicht dargestellten Kraftfahrzeuges bestimmt ist und die aus einer Zylinderbank 10 mit vier in Reihe angeordneten Zylindern 11 besteht. Für die Beschreibung des Startregimes (1) kann die Verbrennungskraftmaschine 2 in einer fremd- oder selbstzündenden Bauart ausgeführt sein, wobei in Fig. 1 keine Komponenten des Zündsystems dargestellt sind. Die Verbrennungskraftmaschine 2 verfügt über eine Kraftstoff-Direkteinspritzung, bestehend aus einem Kraftstoffleitungssystem 22 mit daran angeschlossenen Einspritzventilen 42 sowie einer Stelleinrichtung für diese Einspritzventile 23, durch welche der Kraftstoff direkt in die Brennräume der Zylinder 11 eingespritzt wird. Bei fremdgezündet ausgeführten Verbrennungskraftmaschinen 2 kann es sich alternativ auch um eine Ansaugrohreinspritzung handeln, bei welcher der Kraftstoff in das Ansaugrohr 20, über welches die Luftversorgung der Zylinder 11 erfolgt, eingespritzt wird. Sowohl die Kraftstoffmenge als auch der Zeitpunkt der Kraftstoffzuführung kann in jedem Fall zylinderselektiv und arbeitsspielindividuell, durch das Motorsteuergerät 50 in Kombination mit der Einspritzsteuereinrichtung 51, gesteuert werden. Die der Verbrennungskraftmaschine 2 zugeführte Luftmenge kann über ein nicht dargestelltes, im Ansaugrohr 20 angeordnetes Drosselventil, oder aber über eine Ansteuerung der Einlaßventile 44, im Falle einer fremdgezündeten Ausführungsart, gesteuert werden. Ein die Verbrennungskraftmaschine 2 verlassendes Abgas wird durch einen Abgaskrümmer mit Abgaskanal 40 und optional anschließend über einen nicht in Fig. 1 dargestellten Turbolader an einen (oder auch mehrere) Katalysator(en) 47 geleitet und mittels diesem gereinigt. Die Steuerung von Betriebsparametern der Verbrennungskraftmaschine 2, wie beispielsweise Menge und Einspritzbeginn des zugeführten Kraftstoffes, Luftmenge und Zündung sowie Motordrehzahl und Ventilsteuerzeiten erfolgt über ein Motorsteuergerät 50, welches wiederum die Ventilsteuereinrichtung 52 und/oder die Einspritzsteuereinrichtung 51 ansteuert, wobei die Ansteuersignal 70, 72, 71 über einen CAN-Bus realisiert werden. Das Motorsteuergerät 50 erfaßt mit Hilfe geeigneter Sensoren 66, 81, 82, 83, 84, 61, 62, 67 alle relevanten Betriebsparameter, welche zur Inbetriebnahmesteuerung der Verbrennungskraftmaschine 2 notwendig sind. In das Motorsteuergerät 50 ist eine integrierte Steuereinheit 53 eingebunden, welche die entsprechenden Algorithmen zur Durchführung der Inbetriebnahmeregime (1), (2), (3) der Verbrennungskraftmaschine 2 gemäß der vorliegenden Erfindung umfaßt.

Wie in der Erfindungsdarstellung bereits erläutert, besteht insbesondere beim Anlassen von Verbrennungskraftmaschinen 2 das Problem einer hohen Leistungsaufnahme durch den Startergenerator 30, meist repräsentiert in Form von hohen Anlaßstromstärken. Erfindungsgemäß wird diese Problem deutlich reduziert, indem während des Anlassens der Verbrennungskraftmaschine 2 das Motorsteuergerät 50 das Startregime (1) der integrierten Steuereinheit 53 aktiviert. Im Rahmen dieses Ausführungsbeispieles besitzt die Verbrennungskraftmaschine 2 eine vollvariable Auslaßventilbetätigung 41, deren Ansteuerung mittels einer Ventilsteuereinrichtung 52 erfolgt und über das Motorsteuergerätes 50 gemanagt wird. Mit Betätigung eines nicht dargestellten Anlaßtasters werden über die integrierte Steuereinheit 53 und die Ventilsteuereinrichtung 52 sowohl die Stelleinrichtungen für die Auslaß- 41 als auch die Stelleinrichtungen für die Einlaßventile 21 angesteuert, damit im Rahmen des durch den angesteuerten Magnetschalters 35 und die im Ergebnis geschlossenen Kontaktstücken für die Anlaßstromsteuerung 33 der Startvorgang eingeleitet werden kann. Wegen der zuvor angesteuerten Stelleinrichtungen für die Auslaß- 41 und Einlaßventile 21 erfolgt erfindungsgemäß keine Kompression der Zylinderinhalte während der Kolbenbewegung von UT nach OT sowie auch keine Entspannung der Zylinderinhalte während der anschließenden Kolbenbewegung von OT nach UT bis zur entsprechenden Enddrehzahl. Die jeweilige Enddrehzahl wird mit aktivieren des Startregimes (1) auf der Basis der abgerufenen Sensordaten 81, 82, 83, 84, 67 durch die integrierte Steuereinheit 53 vorgegeben. Mit Hilfe des Drehzahlsensors 61 erfolgt die Drehzahlerfassung in Verbindung mit der Gebereinheit für Kurbelwellendrehzahl und -stellung 25 einschließlich der Parameterweitergabe an das Motorsteuergerät 50 und somit an die integrierte Steuereinheit 53. Außerdem erfolgt während des Startregimes (1) durch das Motorsteuergerät 50 eine Signalausgabe an die Kraftstoffregeleinrichtung 51, welche ein Ansteuersignal an die Stelleinrichtungen für die Einspritzventile 23 zur Kraftstoffabschaltung ausgibt, wodurch keine Kraftstoffzufuhr über die Einspritzdüsen 70 in die Zylinder 11 erfolgt. Ebenfalls erfolgt auch eine Signalausgabe zur Abschaltung der Zündsignale bei Ausführungen von Verbrennungskraftmaschinen mit Fremdzündung (in Fig. 1 nicht dargestellt). Der Startergenerator 30, welcher zum Anlassen der Verbrennungskraftmaschine 2 eingesetzt wird, weist in diesem Ausführungsbeispiel eine permanente Verbindung mittels eines Zahnriemens 37 mit der Verbrennungskraftmaschine 2 auf, welche durch ein Kurbelwellenabtriebsrad 36 umgesetzt wird. Die Stromzufuhr zum Startgenerator 30 wird nach dem Erreichen der Enddrehzahl durch einen Magnetschalter 35 abgeschaltet, welcher ein entsprechendes Ansteuersignal für den Startergenerator 74 von der integrierten Steuereinheit 53 erhält. Der sich nun anschließende Start der Verbrennungskraftmaschine 2, bei welchem ein Übergang vom unbefeuerten in den befeuerten Betriebszustand erfolgt, wird durch ein arbeitsspielabhängiges und zylinderselektives Ansteuern der Steuerorgane entsprechend der Zündfolge 1-3-4-2 und der im Motorsteuerdiagramm definierten Steuerzeiten eingeleitet. Dies wird im Ausführungsbeispiel laut Fig.1 in der Art umgesetzt, dass im Moment des Signalseingangs Enddrehzahl im Motorsteuergerät 50 über die integrierte Steuereinheit 53 ein Ansteuersignal für den Startergenerator 74 an den Magnetschalter 35 ausgegeben wird, wodurch der Magnetschalter 35 öffnet und die Stromzufuhr in der elektrischen Leitung für den Anlaßstrom 34 über die Kontaktstücke für die Anlaßstromsteuerung 33 unterbricht. Auf Basis der durch den Sensor für Kurbelwellenstellung 62 ausgegebenen Stellung der Kurbelwelle 24 beginnt unter Beachtung der Zündfolge die Signalausgabe des Motorsteuergerätes 50 an die Ventilsteuereinrichtung 52 und die Einspritzsteuereinrichtung 51, damit zylinderindividuell eine Befeuerung nach durchlaufenem Ansaugtakt beginnt. Damit verbunden ist die Einstellung entsprechender Motorbetriebsparameter (beispielsweise Beginn der Kraftstoffzufuhr je Zylinder, Menge des zugeführten Kraftstoffs, Zündwinkel) zur Inbetriebnahme der Verbrennungskraftmaschine 2 durch Ausgangssignale des Motorsteuergerätes 50 an die jeweiligen Stelleinrichtungen 51, 52, 23 21, 41. Die Befeuerung der Zylinder 11, unter Beachtung der vorgegeben Zündfolge, pflanzt sich bis zur vollständigen Befeuerung aller Zylinder 11 der Verbrennungskraftmaschine 2 fort. Mit dem Einstellen der Leerlaufdrehzahl und vollständiger Befeuerung der Verbrennungskraftmaschine 2 deaktiviert das Motorsteuergerät 50 das Startregime (1) der integrierten Steuereinheit 53.

Für die Beschreibung des Kaltstartregimes (2) wird ebenfalls die in Fig. 1 dargestellte Verbrennungskraftmaschine 2 genutzt. Der Anstoß für das Aufrufen des Kaltstartregimes (2) ist die Betätigung eines in Fig. 1 nicht dargestellten Anlaßtasters in Verbindung mit einer erfaßten Temperaturdifferenz am Katalysator 47 zwischen Ist- und im Motorsteuergerät 50 abgelegten Betriebstemperatur. Die Temperatursensoren am Katalysatorein- 81 und -austritt 82 liefern dabei dem Motorsteuergerät 50 die vorhandenen Temperaturwerte. Im Ergebnis einer festgestellten Temperaturdifferenz aktiviert das Motorsteuergerät 50 das Kaltstartregime (2) in der integrierten Steuereinheit 53. Auf der Grundlage der Sensordaten 81, 82, 83, 84, 61, 62, 67 wird durch die integrierte Steuereinheit 53 die erforderliche Kaltstart- und Enddrehzahl bestimmt. Die Inbetriebnahme der Verbrennungskraftmaschine 2 erfolgt anschließend in gleicher Weise wie beim zuvor beschriebenem Startregime (1), jedoch wird die Kurbelwelle 24 durch den Startergenerator 30 über den Enddrehzahlwert hinaus bis zur Kaltstartdrehzahl angetrieben. Mit Erreichen der Kaltstartdrehzahl, welche durch den Sensor für die Kurbelwellendrehzahl 61 gemessen und an das Motorsteuergerät 50 übertragen wurde, wird die Stromzufuhr zum Startgenerator 30 durch einen Magnetschalter 35 abgeschaltet, welcher in diesem Moment ein entsprechendes Ansteuersignal für den Startergenerator 74 von der integrierten Steuereinheit 53 erhält. Dies wird im Ausführungsbeispiel laut Fig.1 in der Art umgesetzt, dass im Moment des Eingangssignals der Kaltstartdrehzahl im Motorsteuergerät 50 über die integrierte Steuereinheit 53 ein Ansteuersignal für den Startergenerator 74 an den Magnetschalter 35 ausgegeben wird, wodurch der Magnetschalter 35 öffnet und die Stromzufuhr in der elektrischen Leitung für den Anlaßstrom 34 über die Kontaktstücke für die Anlaßstromsteuerung 33 unterbrochen wird. Die sich anschließende Vorwärmphase der Verbrennungsluft beginnt durch ein arbeitsspielabhängiges und zylinderselektives Ansteuern der Steuerorgane entsprechend der Zündfolge 1-3-4-2. Dies erfolgt in der Art, dass die integrierte Steuereinheit 53 die Ventilsteuereinrichtung 52 zum Zeitpunkt der Kaltstartdrehzahl ansteuert, so das generell, also bei allen Kolbenbewegungen von UT nach OT, die Auslaßventile 43 geschlossen bleiben. Die Einaßventile 44 zum Zeitpunkt der Kaltstartdrehzahl durch eine Signalvorgabe der integrierten Steuereinheit 53 an die Ventilsteuereinrichtung 52 so angesteuert, dass lediglich eine Öffnung zum Ansaugen von Luft während der ersten vollständigen Kolbenbewegung vom OT zum UT nach Erreichen der Kaltstartdrehzahl erfolgt. Danach bleiben auch die Einlaßventile 44 bis zum Erreichen der Enddrehzahl geschlossen. Wird durch den Sensor für Kurbelwellendrehzahl 61 der Enddrehzahlwert gemessen, erfolgt über das Motorsteuergerät 50 eine Information an die integrierte Steuereinheit 53. Diese ruft weiterhin die Stellung der Kurbelwelle 24 über den Sensor für Kurbelwellenstellung 62 ab und beginnt entsprechend der Zündfolge die Signalausgabe zum Start der Befeuerung der Verbrennungskraftmaschine. Dies erfolgt in der Art, dass über das Motorsteuergeräte 50 zur Einspritzsteuereinrichtung 51 ein Signalausgabe stattfindet, wodurch eine sequentielle zylinderindividuelle Befeuerung entsprechend der Zündfolge und unter Beachtung der Kolbenstellung auf Basis des erfaßten Wertes für die Kurbelwellenstellung durch den Sensor für Kurbelwellenstellung 62 beginnt. Damit verbunden ist die Einstellung entsprechender Motorbetriebsparameter (beispielsweise Beginn der Kraftstoffzufuhr je Zylinder, Menge des zugeführten Kraftstoffs, Zündwinkel) zur Inbetriebnahme der Verbrennungskraftmaschine 2 durch Ausgangssignale des Motorsteuergerätes 50 an die entsprechenden Stelleinrichtungen 51, 52, 23 21, 41. Mit dem ersten befeuerten Arbeitstakt eines Zylinders 11 wird das Kaltstartregime (2) durch das Motorsteuergerät 50 deaktiviert.

Für die Beschreibung des Aufwärmregimes (3) wird ebenfalls die in Fig. 1 dargestellte Verbrennungskraftmaschine 2 genutzt. Im Ausführungsbeispiel sind beide Aufwärmunterregime, das Abgasaufwärmregime (3.1) und das Verbrennungsluftvorwärmregime (3.2), in der integrierten Steuereinheit 53 vorhanden. Den Anstoß für das Aufrufen beider Aufwärmunterregime (3.1 und 3.2) bildet eine erfaßte Temperaturdifferenz am Katalysator 47 zwischen Ist- und im Motorsteuergerät 50 abgelegter Betriebstemperatur, welche durch die Temperatursensoren am Katalysatorein- 81 und -austritt 82 gemessen wurde. Im Ergebnis ruft das Motorsteuergerät 50 das Aufwärmregime (3) in der integrierten Steuereinheit 53 ab. Auf der Grundlage der Sensordaten 66, 81, 82, 83, 84, 61, 62, 67 wird durch die integrierte Steuereinheit 53 die temperaturabhängige Schließdaueranpassung der Auslaßventile 43 für jeden Ausstoßtakt zylinderindividuell bestimmt und mit Hilfe der Ventilsteuereinrichtung 52 an die Stelleinrichtungen für die Auslaßventile 41 übertragen und durch diese eingestellt. Dabei richtet sich die eingestellte Verkürzung der Öffnungsdauer der Auslaßventile 43 im Ausstoßtakt nach der anliegenden Temperaturdifferenz am Katalysatorein- und -ausgang bezüglich der durch das Motorsteuergerät 50 vorgegebenen Betriebstemperatur. Mit Einstellung der Betriebstemperatur am Katalysatorein- und -ausgang deaktiviert das Motorsteuergerät 50 das Abgasaufwärmregime (3.1) der integrierten Steuereinheit 53 und übernimmt wieder die Ansteuerung der Auslaßventile 43 der Verbrennungskraftmaschine 2. Das Verbrennungsluftvorwärmregime (3.2) wird im Ausführungsbeispiel entsprechend Fig. 1 zeitgleich zum vorangegangen beschriebenen Abgasaufwärmregime (3.1) durch das Motorsteuergerät 50 in der integrierten Steuereinheit 53 aktiviert. Dabei bildet ebenfalls die erfaßte Temperaturdifferenz am Katalysator 47 zwischen Ist- und der im Motorsteuergerät 50 abgelegten Betriebstemperatur, welche durch die Temperatursensoren am Katalysatorein- 81 und -austritt 82 gemessen wurde, das Aktivierungsereignis. Entsprechend des festgestellten Wertes der Temperaturdifferenz sendet die integrierte Steuereinheit 53 Signale an die Ventilsteuereinrichtung 52. Dadurch erfolgt eine Öffnung der Auslaßventile 43 durch die Stelleinrichtung für die Auslaßventile 41 im jeweiligen Ansaugtakt, wodurch für die Dauer der Auslaßöffnung Abgas angesaugt wird. Die Öffnungsdauer ist abhängig von der festgestellten Temperaturdifferenz und um so größer, je größer auch diese Temperaturdifferenz ist. Bis auf einen definierten Bereich der Ventilüberschneidung, auf Grund der Trägheit der Gase, erfolgt erst mit der Ansteuerung der Stelleinrichtung für die Auslaßventile 41 im jeweiligen Ansaugtakt eine Ansteuerung durch die integrierte Steuereinheit 53 über die Ventilsteuereinrichtung 52 zu den Stelleinrichtungen für die Einlaßventile 21 zur Öffnung im jeweiligen Ansaugtakt. In diesem Zusammenhang wird die Öffnungsdauer der Auslaßventile 43 während des Ansaugtaktes zusätzlich durch die Motorlast beeinflußt. Dies erfolgt in der Art, dass mit hoher Motorlast die Öffnungsdauer der Auslaßventile 43 im Ansaugtakt sinkt. Somit steuert die integrierte Steuereinheit 53 die Öffnungsdauern sowohl der jeweiligen Auslaß- 43 als auch der Einlaßventile 44 in Abhängigkeit einer Vielzahl von Motorbetriebsparametern entsprechend definierter Kennfeldbereiche last- und katalysatortemperaturgeführt. Zu diesen Parametern zählen unter anderem das aktuelle Lastniveau der Verbrennungskraftmaschine 2, die Stellung eines nicht in Fig. 1 dargestellten Fahrpedals, der Katalysatortemperatur sowie der Drehzahl. Die relevanten Größen für die Ansteuerung der Stelleinrichtungen für die Einlaßventile 21 und die Stelleinrichtungen für die Auslaßventile 41 werden kennfeldbezogen durch die integrierte Steuereinheit 53 bereitgestellt. Mit Einstellung der Betriebstemperatur am Katalysatorein- und -ausgang deaktiviert das Motorsteuergerät 50 das Verbrennungsluftvorwärmregime (3.2) der integrierten Steuereinheit 53 und übernimmt wieder die Ansteuerung der Auslaß- 43 und Einlaßventile 44 der Verbrennungskraftmaschine 2.

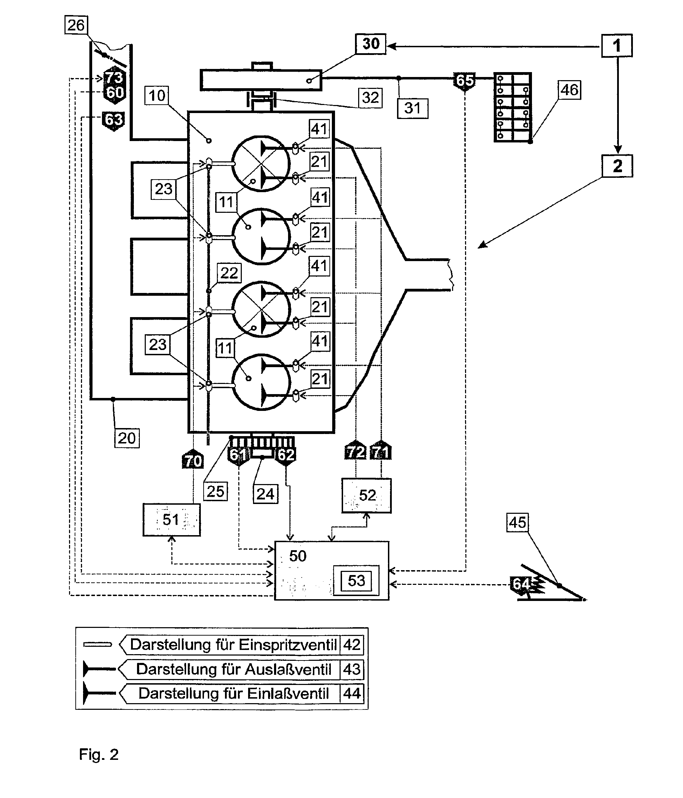

Fig. 2 zeigt in schematisierter Darstellung ein hybrides Antriebssystem 1, bestehend aus einer Verbrennungskraftmaschine 2 und einem Startergenerator 30, welches zum Antrieb eines nicht dargestellten Kraftfahrzeuges bestimmt ist. Die Verbrennungskraftmaschine 2 besteht aus einer Zylinderbank 10 mit vier in Reihe angeordneten Zylindern 11. Die Verbrennungskraftmaschine 2 kann in einer fremd- oder selbstzündenden Bauart ausgeführt sein, wobei in Fig. 2 keine Komponenten des Zündsystems dargestellt sind. Die Verbrennungskraftmaschine 2 verfügt über eine Kraftstoff-Direkteinspritzung, bestehend aus einem Kraftstoffleitungssystem 22 mit daran angeschlossenen Einspritzventilen 42 sowie einer Stelleinrichtung für diese Einspritzventile 23, durch welche der Kraftstoff direkt in die Brennräume der Zylinder 11 eingespritzt wird. Bei fremdgezündet ausgeführten Verbrennungskraftmaschinen 2 kann es sich alternativ auch um eine Ansaugrohreinspritzung handeln, bei welcher der Kraftstoff in das Ansaugrohr 20, über welches die Luftversorgung der Zylinder 11 erfolgt, eingespritzt wird. Sowohl die Kraftstoffmenge als auch der Zeitpunkt der Kraftstoffzuführung kann in jedem Fall zylinderselektiv und arbeitsspielindividuell durch das Motorsteuergerät 50 in Kombination mit der Einspritzsteuereinrichtung 51 gesteuert werden. Die der Verbrennungskraftmaschine 2 zugeführte Luftmenge wird über eine im Ansaugrohr 20 angeordnete Drosselklappe 26 gesteuert. Die Stellung der Drosselklappe 26 wird durch den Sensor für Drosselklappenstellung 60 und die der Verbrennungskraftmaschine 2 zugeführte Luftmenge über den Sensor zur Luftmassenmessung 63 erfasst und an das Motorsteuergerät 50 übertragen. Die Einstellung des Drosselklappenwinkels erfolgt durch das Motorsteuergerät 50 durch das Ansteuersignal für Drosselklappenstellung 73. Ein die Verbrennungskraftmaschine 2 verlassendes Abgas wird durch einen Abgaskrümmer mit Abgaskanal 40 und optional anschließend über einen nicht in Fig. 2 dargestellten Turbolader an einen (oder auch mehrere) ebenfalls nicht in Fig. 2 dargestellten Katalysator(en) geleitet und mittels diesem gereinigt. Die Steuerung von Betriebsparametern der Verbrennungskraftmaschine 2, wie beispielsweise Menge und Einspritzbeginn des zugeführten Kraftstoffes, Ansaugluftmenge, Zündzeitpunkt sowie Motordrehzahl und Ventilsteuerzeiten, erfolgt über ein Motorsteuergerät 50, welches wiederum die Ventilsteuereinrichtung 52 und/oder die Einspritzsteuereinrichtung 51 ansteuert, wobei die Ansteuersignale 70, 71, 72 über einen CAN-Bus realisiert werden. Das Motorsteuergerät 50 erfaßt mit Hilfe geeigneter Sensoren 60, 61, 62, 63, 64, 65 relevante Betriebsparameter, welche zur Steuerung des Mitlaufstart- und Mitlaufbeendigungs-Regimes der Verbrennungskraftmaschine 2 notwendig sind. In das Motorsteuergerät 50 ist eine integrierte Steuereinheit 53 eingebunden, welche Algorithmen zur Steuerung der Verbrennungskraftmaschine 2 gemäß der erfindungsgemäßen Regime umfaßt.

Das Mitlaufstart-Regime (4) steuert den Übergang der Verbrennungskraftmaschine vom Last- in den Schubbetrieb und somit vom befeuerten in den unbefeuerten Betriebszustand. In Erwiderung auf eine Fahrpedalstellung 64, welche eine Beendigung der Kraftstoffzufuhr zur Verbrennungskraftmaschine 2 signalisiert, erfolgt zunächst in Abhängigkeit vom Ladezustand 65 der Batterien 46 und dem Vorliegen eines Schaltungssignals für einen Gangwechsel die Entscheidung, ob das Mitlaufstart-Regime durch das Motorsteuergerät 50 aufgerufen wird. Die Aktivierung des Mitlaufstart-Regimes unterbleibt, wenn der Ladezustand der Batterien 46 über einem Schwellwert liegt oder durch Kupplungs- oder Schaltgeberbetätigung ein Gangwechsel bevorsteht. Ist dies nicht der Fall, bleibt die Kopplungsstelle Verbrennungskraftmaschine - Startergenerator 32 bestehen und auch die mögliche Einstellung eines Drehzahlschlupfes zwischen Kurbelwellen- und Antriebsstrangdrehzahl an der entsprechenden Kopplungsstelle 32 erhält die Drehzahl der Kurbelwelle 24 auf einem gleichem oder größerem Drehzahlwert als der jeweilige Leerlauf-Drehzahlwert der Verbrennungskraftmaschine 2. Vielmehr führt die Aktivierung des Mitlaufstart-Regimes dazu, dass durch die integrierte Steuereinheit 53 zuerst die Kraftstoffzufuhr durch die Kraftstoffregeleinrichtung 51 abgeschaltet und gegebenenfalls die Einleitung von Zündsignalen unterbunden wird. Im Anschluß werden mit Hilfe der Ventilsteuereinrichtung 52 sowohl die Auslaßventile 43 jedes Zylinders 11 bei jeder Kolbenbewegung vom unteren zum oberen Totpunkt als auch die Einlassventile 44 jedes Zylinders 11 bei jeder Kolbenbewegung vom oberen zum unteren Totpunkt geöffnet. Gleichzeitig erhält die Drosselklappe 26 von der integrierten Steuereinheit 53 ein Ansteuersignal für die Drosselklappenstellung 73, welches zur vollständigen Öffnung führt. Die komplette Umsetzung der von der integrierten Steuereinheit 53 ausgegebenen Steuerbefehle bewirkt, dass die Verbrennungskraftmaschine 2 in einen geschleppten Betriebszustand übergeht, welcher dadurch gekennzeichnet ist, dass sich die Verbrennungskraftmaschine 2 ohne Kompressions- und Entspannungsarbeit zu verrichten mit minimalem Energieeinsatz dreht. Auf Grund dieses Mitdrehens der Verbrennungskraftmaschine 2 bleibt auch der Raildruck im Kraftstoffleitungssystem 22 auf einem Niveau, welches eine sofortige Wiederinbetriebnahme sicherstellt.

In Erwiderung auf eine Fahrpedalstellung 64, welche eine Lastanforderung durch Betätigung des Fahrpedals 45 signalisiert und durch die elektrische Antriebseinheit 30, 31, 46 allein nicht umsetzbar ist, wird zuerst das Mitlaufstart-Regime durch das Motorsteuergerät 50 in der integrierten Steuereinheit 53 deaktiviert und das Mitlaufbeendigungs-Regime (5) in der integrierten Steuereinheit 53 aktiviert. Im Anschluß werden die Einlaß- 44 und Auslassventile 43 durch die Ventilsteuereinrichtung 52 entsprechend der im Steuerdiagramm vorgegebenen Zeiten in Abhängigkeit von der ermittelten Kurbelwellenstellung 62 angesteuert. Die Drosselklappe 26 wird in Reaktion auf die Lastanforderung durch die integrierte Steuereinheit 53 durch ein Ansteuersignal für Drosselklappenstellung 73 in eine der Lastanforderung entsprechende Lage eingestellt. Dies führt dazu, dass mit der Betätigung des Fahrpedals 45 die Befeuerung mit dem Zylinder 11 beginnt, welcher als erster einen dem Betriebspunkt entsprechenden Ansaugtakt durchlaufen hat, bei welchem sowohl die Ventilsteuereinrichtung 52 das Einlassventil 44 über die Stelleinrichtung für Einlassventil 21 während der gesamten Kolbenbewegung vom oberen zum unteren Totpunkt unter Berücksichtigung des Steuerdiagramms gesteuert hat als auch die Drosselklappe 26 durch ein Ansteuersignal für Drosselklappenstellung 73 in eine dem Betriebspunkt entsprechende Stellung gebracht wurde. Der sich anschließende Verdichtungstakt dieses Zylinders 11 leitet den Wiederbeginn des befeuerten Betriebszustandes ein. Dabei wird durch die integrierte Steuereinheit 53 über die Kraftstoffregeleinrichtung 51 eine dem Betriebspunkt repräsentierende Kraftstoffmenge bei einer definierten Kurbelwellenstellung zur Einspritzung durch die Stelleinrichtungen für die Einspritzventile 51 eingestellt und diese über das Einspritzventil 42 eingespritzt. Dieser Wiederinbetriebnahme-Prozess pflanzt sich entsprechend der Zündfolge bis zur Befeuerung aller Zylinder 11 der Verbrennungskraftmaschine 2 fort. Mit dem Durchlaufen der Ansaugtakte erfolgen auch die Ansteuerungen für die nicht in Fig. 2 dargestellten Zündeinrichtungen, wodurch entsprechend dem einzustellendem Betriebspunkt durch das Motorsteuergerät 50 Zündimpulse für alle Zylinder 11 ausgegeben werden. Mit dem Übergang zu einer vollständigen Befeuerung aller Zylinder 11 der Verbrennungskraftmaschine 2 deaktiviert das Motorsteuergerät 50 das Mitlaufbeendigungs-Regime der integrierten Steuereinheit 53.

## Patentansprüche

1. Verfahren zur Steuerung von Verbrennungskraftmaschinen mit einer zylinderselektiv und arbeitsspielindividuell steuerbaren Kraftstoffeinspritzung und/oder Ladungswechselsteuerung sowie einer integrierten Steuereinheit, welche den Betriebszustand der Verbrennungskraftmaschine charakterisierende Sensordaten erfasst und daraus den Betriebszustand dieser bestimmt, wodurch Sollwerte für Stelleinrichtungen zum Öffnen und/oder Schließen der Dekompressionseinrichtung jedes Zylinders, zum Öffnen und/oder Schließen der Ladungswechselsteuerungsorgane jedes Zylinders, zum Öffnen und/oder Schließen der Einspritzventile jedes Zylinders, zum Öffnen und/oder Schließen der Drosselklappe, zum Öffnen und/oder Schließen der Energiezuführung zur Anlasseinrichtung ausgegeben werden und **dadurch** der ermittelte Soll-Betriebszustand der Verbrennungskraftmaschine eingestellt wird, wobei die Funktionen einer Dekompressionseinrichtung alternativ durch die Steuerorgane der Verbrennungskraftmaschine übernommen werden können und mittels eines Diagnosefunktionsmoduls erfasste Fehlfunktionen in der Signalverarbeitung innerhalb der integrierten Steuereinheit in einer Datensicherung durch das Motorsteuergerät auslesbar archiviert werden, **dadurch gekennzeichnet, dass** während der Inbetriebnahme Temperaturparameter und/oder Motorlast- und/oder Drehzahlwerte durch die integrierte Steuereinheit abgefragt werden, um Sollwerte für die Stelleinrichtungen je nach ermittelten Eingangsdaten unter Nutzung gespeicherter Betriebszustandvarianten innerhalb der integrierten Steuereinheit aufzurufen.

2. Verfahren nach Anspruch 1 **dadurch gekennzeichnet, dass** zur Steuerung einer in ein hybrides Antriebssystem eingebundenen Verbrennungskraftmaschine während des Betriebszustandwechsels vom Last- in den Schubbetrieb oder umgekehrt der Verbrennungskraftmaschine eine Ansteuerung einer Dekompressionseinrichtung für jeden Zylinder durch die integrierte Steuereinheit erfolgt, wobei mittels erfasster Sensordaten entsprechende Sollwerte in Form eines Mitlaufstart-Regimes und/oder eines Mitlaufbeendigungs-Regime bereitgestellt werden.

3. Verfahren nach Anspruch 1 **dadurch gekennzeichnet, dass** ein Ansteuersignal für die Starteinrichtung der Verbrennungskraftmaschine nach Durchlauf nachfolgender Verfahrensschritte durch die integrierte Steuereinheit generiert wird: dem Übermitteln eines Startwunsches an das Motorsteuergerät, dem Verarbeiten von Temperatursignalen in einer integrierten Steuereinheit, dem Generieren voneinander entkoppelter Ansteuersignale für die Ventilsteuerung, der Steuerung für die Dekompressionseinrichtung, der Kraftstoffregeleinrichtung, der Fremdzündsteuer-Einrichtung und der Energiezufuhr zur Starteinrichtung, der Bereitstellung von Sollwerten für die End- und/oder Kaltstartdrehzahl in Abhängigkeit der erfassten Temperatursignale.

4. Verfahren nach Anspruch 1 und 3, **dadurch gekennzeichnet, dass** mit dem Einleiten der Inbetriebnahme der Verbrennungskraftmaschine zuerst die Temperaturen des Kühlmittels und/oder der Ansaugluft und/oder des Motoröls und/oder des Katalysators ermittelt werden und auf dieser Grundlage dieser Sensordaten durch die integrierte Steuereinheit ein End- und/oder Kaltstart-Drehzahlwert bestimmt wird.

5. Verfahren nach Anspruch 1 sowie 3 und 4, **dadurch gekennzeichnet, dass** mit dem Einleiten der Inbetriebnahme der Verbrennungskraftmaschine und mit Erreichen eines Enddrehzahlwertes und/oder Kaltstart-Drehzahlwertes in Abhängigkeit von der Kurbeiwellenstellung die Dekompressionseinrichtung geschlossen wird und/oder dass mit dem Einleiten der Inbetriebnahme der Verbrennungskraftmaschine und mit Erreichen eines Enddrehzahlwertes und/oder Kaltstart-Drehzahlwertes die Strom- oder Medienzufuhr zur Anlasseinrichtung unterbrochen wird und die Befeuerung der Verbrennungskraftmaschine ohne ein im Eingriff stehende Anlasseinrichtung erfolgt und/oder dass mit dem Einleiten der Inbetriebnahme der Verbrennungskraftmaschine und mit Erreichen eines Enddrehzahlwertes in Abhängigkeit von der Kurbelwellenstellung die Befeuerung entsprechend der Zündfolge mit dem Zylinder beginnt, welcher als erster einen vollständigen Ansaugtakt durchlaufen hat.

6. Verfahren nach Anspruch 1 sowie 3 bis 5, **dadurch gekennzeichnet, dass** mit erreichter Kaltstartdrehzahl die Dekompressionseinrichtungen aller Zylinder in der Zündreihenfolge geschlossen werden, wobei mit dem Zylinder begonnen wird, welcher zuerst einen vollständigen Ansaugtakt durchlaufen hat und/oder dass mit erreichter Kaltstartdrehzahl die Auslassventile bei der ersten vollständigen Kolbenbewegung vom UT nach OT geschlossen werden.

7. Verfahren nach Anspruch 1 sowie 3 bis 6, **dadurch gekennzeichnet, dass** bis zum Erreichen des Enddrehzahlwertes und/oder Kaltstart-Drehzahlwertes mögliche Drosseleinrichtungen im Ansaugsystem vollständig geöffnet sind und/oder dass bis zum Erreichen des Enddrehzahlwertes und/oder Kaltstart-Drehzahlwertes mögliche Drosseleinrichtungen im Abgassystem vollständig geöffnet sind und auch das Wast-Gate eines optional vorhandenen Turboladers vollständig geöffnet ist.

8. Verfahren nach Anspruch 1 sowie 3 bis 7, **dadurch gekennzeichnet, dass** Drosseleinrichtungen im Ansaugsystem nach dem Erreichen der Enddrehzahl und/oder Kaltstart-Drehzahlwertes so angesteuert werden, dass das für einen stabilen Leerlauf der Verbrennungskraftmaschine erforderliche Luftvolumen durch die Drosselklappenstellung eingestellt ist.

9. Verfahren nach Anspruch 1 sowie 3 bis 8, **dadurch gekennzeichnet, dass** mit Absinken der Kaltstartdrehzahl auf den Enddrehzahlwert das Einleiten der Inbetriebnahme der Verbrennungskraftmaschine beginnt und mit Erreichen des Enddrehzahlwertes in Abhängigkeit von der Kurbelwellenstellung die Befeuerung entsprechend der Zündfolge mit dem Zylinder beginnt, welcher als erster einen vollständigen Ansaugtakt durchlaufen hat und/oder dass der Wert der Enddrehzahl in Abhängigkeit des Raildruckes während des Startzeitraumes durch die integrierte Steuereinheit korrigiert werden kann.

10. Verfahren nach Anspruch 1 sowie 3 bis 9, **dadurch gekennzeichnet, dass** die Aktivierung des Kaltstartregimes danach richtet, ob eine in der integrierten Steuereinheit gespeicherte Temperaturdifferenz am Katalysator zwischen erfasster Ist- und vorgegebener Soll-Temperatur vorliegt und/oder dass mit Unterschreiten eines in der integrierten Steuereinheit gespeicherten Temperaturgrenzwertes der Katalysator- und/oder Kühlmitteltemperatur das Aufwärmregime aktiviert wird, welches die Öffnungsdauer der Auslassventile im Ausstoßtakt entsprechend der einzustellenden Zieltemperatur und/oder Motorlast steuert und/oder dass im Anschluss an den Arbeitstakt die Auslassventil(e) während des Ausstoßtaktes für einen durch die integrierte Steuereinheit berechneten Kolbenweg vom unteren zum oberen Totpunkt geschlossen bleiben und/oder dass die integrierte Steuereinheit die Aus- und/oder Einlassventilöffnungsdauer in Abhängigkeit der erfassten Sensordaten so steuert, dass zu Beginn des Ansaugtaktes während der Kolbenbewegung vom oberen zum unteren Tonpunkt für einen ermittelten Kolbenweg die Auslassventile geöffnet und die Einlassventile geschlossen bleiben, bis ein in der integrierten Steuereinheit gespeicherter Sollwert der Katalysatortemperatur erreicht ist.

11. Verfahren nach Anspruch 2, **dadurch gekennzeichnet, dass** durch eine integrierte Steuereinheit Ansteuersignale für die Kraftstoffregeleinrichtung, Ventilsteuereinrichtung und Zündeinrichtung nach Durchlauf nachfolgender Verfahrensschritte generiert werden: der Ausgabe eines Nulllast-Signals vom Sensor für die Fahrpedalstellung an die integrierte Steuereinrichtung, dem Abgleich der Batterie-Ist- mit der Batterie-Sollspannung durch die integrierte Steuereinheit und dem Ausschluss eines bevorstehenden Wechsels in der Getriebeübersetzung durch ein Sensorsignal der Kupplung, wodurch die Kraftstoffregeleinrichtung die Kraftstoffeinspritzung in die Zylinder unterbindet, die Ventilsteuereinrichtungen in der Art angesteuert werden, dass die Einlassventile bei jeder Kolbenbewegung vom oberen zum unteren Totpunkt und die Auslassventile bei jeder Kolbenbewegung vom unteren zum oberen Totpunkt geöffnet sind, die Zündeinrichtung keine Zündimpulse erzeugt, alle im Ansaug- und Abgassystem befindlichen Drosseleinrichtungen geöffnet sind und die Stelleinrichtung einen durch die integrierte Steuereinrichtung vorgegebenen Soll-Raildruck im Einspritzsystem gewährleistet.

12. Verfahren nach Anspruch 11, **dadurch gekennzeichnet, dass** mit der Aktivierung des Mitlaufbeendigungs-Regimes die Kraftstoffeinspritzung mit dem Zylinder der Verbrennungskraftmaschine in Abhängigkeit von der Kurbelwellenstellung beginnt, welcher als erster einen vollständigen durch die Ventilsteuereinrichtung entsprechend des durch die integrierte Steuereinrichtung vorgegebenen Betriebspunktes gesteuerten Ansaugtakt mit Einstellung eines erforderlichen Volumenstromes von Ansaugluft- und/oder Ansaugluft-Abgasgemisch durchlaufen hat und sich anschließend die weiterführende Befeuerung der Verbrennungskraftmaschine entsprechend der Zündfolge zylinderweise fortpflanzt.

13. Verfahren nach Anspruch 12, **dadurch gekennzeichnet, dass** eine Leistungsanforderung während des eingestelltem Mitlaufstart-Regimes nur dann durch die integrierte Steuereinheit zur Aktivierung des Mitlaufbeendigungs-Regime führt, wenn die ermittelte Fahrpedalstellung den gespeicherten Maximalwert der Kapazität des oder der Elektromotors(en) übersteigt.

14. Vorrichtung zum Steuern einer Dekompressionseinrichtung für jeden Zylinder einer Verbrennungskraftmaschine, wobei die Verbrennungskraftmaschine eine Ausführungsform mit direkter Kraftstoffeinspritzung aufweist und durch eine integrierte Steuereinrichtung gesteuert wird, **dadurch gekennzeichnet, dass** die integrierte Steuereinheit einen Mikroprozessor aufweist, welcher derart programmiert ist, dass Eingangsdaten von Sensoren der Verbrennungskraftmaschine aufgenommen und **dadurch** der Betriebszustand der Verbrennungskraftmaschine ermittelt sowie Sollwerte für Stelleinrichtungen ausgegeben werden und dass beim Starten der Verbrennungskraftmaschine die integrierte Steuereinheit Sollwerte bereitstellt und an eine Stelleinrichtung ausgibt und dass die integriert Steuereinheit von einem Drehzahlsensor die Drehzahl der Verbrennungskraftmaschine aufnimmt und einen Enddrehzahlwert durch den Mikroprozessor ermittelt, welcher als Sollwertvorgabe dient und die Energiezufuhr an die Starteinrichtung steuert sowie die Kraftstoffregeleinrichtung ansteuert und die Dekompressionseinrichtung für jeden Zylinder ansteuert und dass durch die integrierte Steuereinheit mit jeder Kurbelwellenumdrehung Sensordaten erfasst und durch einen Mikroprozessor ausgewertet werden.

15. Vorrichtung nach Anspruch 14 zur Steuerung einer in ein hybrides Antriebssystem eingebundenen Verbrennungskraftmaschine bestehend aus einer Zylinderbank, einzelnen Zylindern, Ansaugrohr und/oder Stelleinrichtung für Einlassventile und/oder Kraftstoffleitungssystem und/oder Stelleinrichtung für Einspritzventile und/oder Kurbelwelle und/oder Gebereinheit für Kurbelwellendrehzahl und -stellung und/oder Startergenerator und/oder elektrische Verbindungsleitung Startergenerator - Batterie und/oder Kopplungsstelle Verbrennungskraftmaschine - Startergenerator und/oder Abgaskrümmer mit Abgaskanal und/oder Stelleinrichtung für Auslassventile und/oder Einspritzventile für Kraftstoff und/oder Auslassventilen und/oder Einlassventilen und/oder Fahrpedal und/oder elektrische Energiespeicher und/oder Motorsteuergerät und/oder Kraftstoffregeleinrichtung und/oder Ventilsteuereinrichtung und integrierter Steuereinheit und/oder Sensor für Drosselklappenstellung und/oder Sensor für Kurbelwellendrehzahl und/oder Sensor für Kurbelwellenstellung und/oder Sensor zur Luftmassenmessung und/oder Sensor für Fahrpedalposition und/oder Sensor zur Erfassung Ladezustand elektrischer Energiespeicher und/oder Drosselklappe, **dadurch gekennzeichnet, dass** die integrierte Steuereinheit den Zustand der Energiespeicher mit einem Sensor ermittelt, über einen Sensor die Anforderung nach einen Gangwechsel erfasst, wodurch der Mikroprozessor die Sensordaten auswertet und Sollwerte für Stelleinrichtungen ausgibt.

## Claims

1. A method for controlling internal combustion engines having a fuel injection system that can be selectively controlled per cylinder and cycle and/or a gas exchange control system and an integrated control unit that detects sensor data that characterize the operational state of the internal combustion engine and determines its operational state from this data, causing the output of desired values to actuating devices for opening and/or closing a decompression device of each cylinder, for opening and/or closing the gas exchange control devices of each cylinder, for opening and/or closing the injection valves of each cylinder, for opening and/or closing the throttle valve, for opening and/or closing the power supply to the starter device, thereby setting the desired operational state of the internal combustion engine, wherein the functions of a decompression device may alternatively be performed by the control devices of the internal combustion engine and any malfunctions detected using a diagnostic functional module are stored in a data memory within a signal processing component of the integrated control unit and can be retrieved by the engine control unit, **characterized in that** the integrated control unit queries temperature parameters and/or engine load and/or rotational speed values during initialization to invoke desired values based on the input data determined and using stored operational state variants within the integrated control unit.

2. The method according to claim 1, **characterized in that** the integrated control unit triggers a decompression device for each cylinder to control an internal combustion engine that is a component in a hybrid drive system during the change in operational state from load to overrun mode or vice versa, wherein the respective set point values are provided as part of an overrun start and/or overrun end regimen using stored sensor data.

3. The method according to claim 1, **characterized in that** a trigger signal for the starter device of the internal combustion engine is generated after the integrated control unit has run through the following steps: transmitting a starting request to the engine control unit, processing temperature signals in an integrated control unit, generating trigger signals decoupled from one another for the valve control system, the decompression device control system, the fuel control system, the positive ignition system and the power supply to the starter device, provision of set point values for the target and/or cold start rotational speed depending on the temperature signals recorded.

4. The method according to claims 1 and 3, **characterized in that** the temperatures of the coolant and/or the intake air and/or the engine oil and/or the catalytic converter are determined when the internal combustion engine is initialized and a value for the target and/or cold start rotational speed is set based on this sensor data.

5. The method according to claim 1 as well as claims 3 and 4, **characterized in that** the decompression device is closed when initialization of the internal combustion engine is started and a target rotational speed value and/or cold start rotational speed value is reached and/or the power and media supply is interrupted and the internal combustion engine is fueled without an engaged starter device when initialization of the internal combustion engine is started and a target rotational speed value and/or cold start rotational speed value is reached and/or firing starts depending on the position of the cam shaft in accordance with the firing order with the cylinder that is first to complete a full intake stroke when initialization of the internal combustion engine is started and a target rotational speed value is reached.

6. The method according to claim 1 as well as claims 3 to 5, **characterized in that** the decompression devices of all cylinders are closed when the cold start rotational speed is reached, starting with the cylinder that was first to complete a full intake stroke and/or that the outlet valves are closed upon the first complete piston movement from BDC to TDC when the cold start rotational speed is reached.

7. The method according to claim 1 as well as claims 3 to 6, **characterized in that** potential throttling devices in the intake system are fully open until the target rotational speed value and/or the cold start rotational speed value is reached and/or that potential throttling devices in the exhaust system are fully open and the waste gate of an optionally provided turbocharger is fully open until the target rotational speed value and/or the cold start rotational speed value is reached.

8. The method according to claim 1 as well as claims 3 to 7, **characterized in that** throttling devices in the intake system are triggered such that the air volume required for stable idling of the internal combustion engine is set by the position of the throttle valve after reaching the target rotational speed and/or the cold start rotational speed value.

9. The method according to claim 1 as well as claims 3 to 8, **characterized in that** the initialization of the internal combustion engine starts when the cold start rotational speed drops to the value of the target rotational speed and firing starts depending on the position of the cam shaft in accordance with the firing order with the cylinder that is first to complete a full intake stroke when the target rotational speed value is reached and/or **in that** the integrated control unit can adjust the value of the target rotational speed depending on the rail pressure during the starting period.

10. The method according to claim 1 as well as claims 3 to 9, **characterized in that** the cold start regimen is activated if a temperature difference stored in the integrated control unit between the measured actual temperature and the preset desired temperature is detected in the catalytic converter and/or if the heat-up regimen that controls the opening time of the outlet valves during the exhaust stroke in accordance with the target temperature to be set and/or the engine load is activated when the catalytic converter and/or coolant temperature is below a temperature threshold value stored in the integrated control unit, and/or if the outlet valve(s) remain(s) closed during the exhaust stroke for a piston travel from the bottom to the top dead center calculated by the integrated control unit and/or if the integrated control unit regulates the inlet valve and/or outlet valve opening times based on the received sensor data such that the outlet valves are opened and the inlet valves remain closed at the beginning of the intake stroke while the piston travels from the top to the bottom dead center until a desired value of the catalytic converter temperature stored in the integrated control unit is reached.

11. The method according to claim 2, **characterized in that** an integrated control unit generates trigger signals for the fuel control device, the valve control device, and the ignition device after running through the following steps: Output of a zero load signal for the accelerator position from the sensor to the integrated control unit, balancing of the actual battery voltage with the desired battery voltage by the integrated control unit and exclusion of a pending change in gear ratio by a sensor signal from the clutch, as a result of which the fuel control device stops the fuel injection into the cylinders and the valve control devices are triggered such that the inlet valves are open at each piston movement from the top to the bottom dead center and the outlet valves are open at each piston movement from the bottom to the top dead center, the ignition device does not generate any ignition pulses, all throttling devices in the intake and outlet system are open, and the actuating device ensures a rail pressure in the injection system that is predetermined by the integrated control device.

12. The method according to claim 11, **characterized in that** fuel injection starts when the overrun end regimen is activated depending on the cam shaft position with the cylinder of the internal combustion engine that is first to run through a full intake stroke controlled in accordance with the operating point preset by the integrated control unit including the adjustment of the required volume flow of intake air and/or intake air/exhaust gas mix and that firing the internal control engine is continued in the firing order from cylinder to cylinder.

13. The method according to claim 12, **characterized in that** a performance request during the set overrun start regimen only results in activation of the overrun end regimen by the integrated control unit if the determined accelerator position exceeds the stored maximum capacity value of the electric motor(s).

14. A device for controlling a decompression device for each cylinder of an internal combustion engine, wherein said internal combustion engine is configured for direct fuel injection and is controlled by an integrated control unit, **characterized in that** said integrated control unit comprises a microprocessor that is programmed such that input data from sensors of the internal combustion engine are received and used to determine the operational state of said internal combustion engine and to output desired values to actuating devices, and **in that**, when the internal combustion engine is started, the integrated control unit provides desired values and outputs them to an actuating device and **in that** the integrated control unit receives the rotational speed from a rotational speed sensor and determines a target rotational speed value which is used as a preset desired value and controls the power supply to a starting device and triggers the fuel control device and the decompression device for each cylinder, and **in that** the integrated control unit receives sensor data with each cam shaft revolution that are analyzed by a microprocessor.

15. The device according to claim 14 for controlling an internal combustion engine that is a hybrid drive system component consisting of a cylinder bank, individual cylinders, intake pipe and/or actuating device for inlet valves and/or fuel line system and/or actuating device for injection valves and/or cam shaft and/or transmitter unit for cam shaft speed and position and/or starter generator and/or electric cable from starter generator to battery and/or interface between internal combustion engine and starter generator and/or exhaust manifold with exhaust duct and/or actuating device for outlet valves and/or fuel injection valves and/or outlet valves and/or inlet valves and/or accelerator and/or electric energy store and/or engine control unit and/or fuel control device and/or valve control device and integrated control unit and/or sensor for throttle valve position and/or sensor for cam shaft speed and/or sensor for cam shaft position and/or sensor for air-mass measuring and/or sensor for accelerator position and/or sensor for the load state of the electric energy store and/or throttle valve, **characterized in that** the integrated control unit uses a sensor to determine the state of the energy stores, receives a gear shifting request via a sensor, causing the microprocessor to analyze the sensor data and to output desired values to actuating devices.

## Revendications

1. Procédé de commande d'un moteur à combustion interne avec une injection de carburant qui, elle, est réglable pour chaque cylindre et par cycle de fonctionnement, et/ou avec une commande d'alternance de charge ainsi qu'avec une centrale de commande intégrée qui saisit les données caractéristiques des conditions de fonctionnement du moteur à combustion interne mesurées par un capteur qui, lui, en détermine l'état opérationnel du moteur, où des consignes sont émises à des actionneurs de réglage pour ouvrir et/ou fermer les décompresseurs de chaque cylindre, pour ouvrir et/ou fermer les organes de commande de l'alternance de charge de chaque cylindre, pour ouvrir et/ou fermer les injecteurs de chaque cylindre, pour ouvrir et/ou fermer de le papillon des gaz et pour ouvrir et/ou fermer l'arrivée d'énergie au démarreur, ce qui règle l'état opérationnel nominal du moteur à combustion interne qui vient d'être déterminé, les fonctions du décompresseur pouvant alternativement être assurées par les organes de commande du moteur à combustion interne, tandis que les dysfonctionnements saisis à l'aide d'un module de diagnostic lors du traitement de signaux dans la centrale de commande intégrée sont archivés, sous forme d'une sauvegarde de données lisibles, par le calculateur moteur, **caractérisé en ce que** des paramètres de température et/ou de charge du moteur et/ou de régime sont interrogés par la centrale de commande intégré afin de consulter, en fonction des données d'entrée déterminées et sur la base des différents états opérationnels mémorisés dans la centrale de commande intégrée, des consignes pour les actionneurs de réglage.

2. Procédé suivant la revendication 1, **caractérisé en ce que** lors du passage de l'état opérationnel du régime de charge au régime de décélération ou vice versa, la commande d'un moteur à combustion interne qui, lui, fait partie d'un système d'entraînement hybride, est assurée par la centrale de commande intégrée, de telle sorte qu'elle émette un signal de pilotage au décompresseur de chaque cylindre en vue de fournir, sous forme d'un régime parallèle de démarrage et/ou d'arrêt, des consignes déterminées sur la base des données saisies.

3. Procédé suivant la revendication 1, **caractérisé en ce qu'**un signal de pilotage pour le démarreur du moteur à combustion interne est généré par la centrale de commande intégrée après les phases suivantes du procédé: le transfert d'un souhait de démarrage au calculateur moteur, le traitement de signaux de température dans une centrale de commande intégrée, la génération de signaux de pilotage découplés les uns des autres pour la commande des soupapes, la régulation du débit de carburant, l'allumage commandé et l'arrivée d'énergie au démarreur ainsi que, en fonction des signaux de température saisis, la fourniture de consignes pour la vitesse à vide et/ou le régime de démarrage à froid.

4. Procédé suivant les revendications 1 et 3, **caractérisé en ce que** les températures du liquide de refroidissement et/ou de l'air d'admission et/ou de l'huile moteur et/ou du catalyseur sont déterminées au début de la mise en marche du moteur à combustion interne, les données obtenues étant traitées par la centrale de commande intégrée pour calculer un paramètre de la vitesse maximale à vide et/ou du régime de démarrage à froid.

5. Procédé suivant la revendication 1 et les revendications 3 et 4, **caractérisé en ce qu'**au début de la mise en marche du moteur à combustion interne et dès qu'une vitesse maximale à vide et/ou un régime de démarrage à froid sont atteints, le décompresseur est fermé en fonction de la position du vilebrequin, et/ou qu'au début de la mise en marche du moteur à combustion interne et dès qu'une vitesse maximale à vide et/ou un régime de démarrage à froid sont atteints, l'alimentation électrique ou en fluides du démarreur est coupée, et que la combustion du moteur à combustion interne est effectuée sans l'intervention d'un démarreur, et/ou qu'au début de la mise en marche du moteur à combustion interne dès qu'une vitesse maximale à vide est atteint en fonction de la position du vilebrequin, la combustion commence, tout en suivant l'ordre de l'allumage, par le cylindre qui a parcouru le premier un cycle d'admission complet.

6. Procédé suivant la revendication 1 et les revendications 3 à 5, **caractérisé en ce que** dès que régime de démarrage à froid est atteint, les décompresseurs de tous les cylindres sont fermés dans l'ordre de l'allumage, en commençant par le cylindre qui a parcouru le premier un cycle d'admission complet, et/ou dès que régime de démarrage à froid est atteint, les soupapes d'échappement sont fermées lors du premier déplacement complet du piston du point mort inférieur (UT) au point mort supérieur (OT).

7. Procédé suivant la revendication 1 et les revendications 3 à 6, **caractérisé en ce qu'**avant d'atteindre la vitesse maximale à vide et/ou le régime de démarrage à froid, des éventuels papillons des gaz incorporés dans le système d'admission sont entièrement ouverts, et/ou qu'avant d'atteindre la vitesse maximale à vide et/ou le régime de démarrage à froid, des éventuels papillons des gaz incorporés dans le système d'admission sont entièrement ouverts, de même que le relais de la soupape de décharge (waste gate) d'un turbocompresseur optionnel.

8. Procédé suivant la revendication 1 et les revendications 3 à 7, **caractérisé en ce que** dès que la vitesse maximale à vide et/ou le régime de démarrage à froid sont atteints, des éventuels papillons des gaz incorporés dans le système d'admission sont commandés de telle sorte que le volume d'air nécessaire à un ralenti stable du moteur à combustion interne soit réglé par la position du papillon.

9. Procédé suivant la revendication 1 et les revendications 3 à 8, **caractérisé en ce que** la mise en marche du moteur à combustion interne commence au moment où le régime de démarrage à froid atteint la vitesse maximale à vide, et qu'une fois atteint la vitesse maximale à vide en fonction de la position du vilebrequin, la combustion commence, tout en suivant l'ordre de l'allumage, par le cylindre qui a parcouru le premier un cycle d'admission complet, et/ou que la vitesse maximale à vide peut être corrigée lors du temps de démarrage et en fonction de la pression « rail » par la centrale de commande intégrée.

10. Procédé suivant la revendication 1 et les revendications 3 à 9, **caractérisé en ce que** l'activation du régime de démarrage à froid dépend de ce que le catalyseur présente ou non une différence de température qui, elle, est mémorisée dans la centrale de commande intégrée, entre la valeur saisie (température réelle) et la consigne de température spécifiée par défaut, et/ou que le régime de réchauffage est activé dès que la valeur limite de la température du catalyseur et/ou du liquide de refroidissement - celle-ci étant également mémorisée dans la centrale de commande intégrée - dépasse en dessous de la consigne, ce régime de réchauffage servant à régler, lors du cycle d'échappement et en fonction de la température requise et/ou de la charge moteur, la durée d'ouverture des soupapes d'échappement, et/ou qu'après le cycle de travail et lors du temps d'échappement, la (les) soupape(s) restent fermée(s) lors d'un déplacement du piston du point mort inférieur au point mort supérieur qui, lui, a été calculé par la centrale de commande intégrée, et/ou que la centrale de commande intégrée règle la durée des soupapes d'échappement et/ou des soupapes d'admission en fonction des données saisies par capteur, de telle sorte qu'au début du cycle d'admission et lors du déplacement du piston du point mort supérieur au point inférieur, les soupapes d'échappement restent ouvertes lors d'un déplacement calculé du piston, tandis que les soupapes d'admission fermées restent jusqu'au moment où la consigne de la température du catalyseur - celle-ci étant mémorisée dans la centrale de commande intégrée - est atteinte.

11. Procédé suivant la revendication 2, **caractérisé en ce que** des signaux de pilotage pour le régulateur du débit de carburant, la commande de soupapes et l'allumage sont générés par la centrale de commande intégrée après les phases suivantes du procédé: l'émission d'un signal à charge zéro par le capteur d'accélérateur vers la centrale de commande intégrée, l'équilibrage entre la valeur réelle et la consigne de la tension de batterie par la centrale de commande intégrée et l'exclusion d'un changement imminent dans le rapport de transmission de la boîte de vitesses moyennant un signal émis par l'embrayage, ceci ayant pour résultat que le régulateur du débit de carburant interrompt l'injection du carburant dans les cylindres et que les commandes des soupapes sont pilotées de telle sorte que les soupapes (valves) d'admission restent ouvertes lors de chaque déplacement du piston du point mort supérieur au point mort inférieur, tandis que les soupapes d'échappement restent ouvertes lors de chaque déplacement du piston du point mort inférieur au point mort supérieur, que l'allumage ne produit pas de signaux d'amorçage, que tous les papillons situés dans les systèmes d'admission et d'échappement sont ouverts, et que l'actionneur de réglage assure au système d'injection une pression « rail » nominale spécifiée calculée par la centrale de commande intégrée.

12. Procédé suivant la revendication 11, **caractérisé en ce que** l'injection de carburant commence, en fonction de la position du vilebrequin, au moment de l'activation du régime parallèle d'arrêt et par le cylindre du moteur à combustion interne qui a parcouru le premier un cycle d'admission complet, le débit volumique nécessaire de l'air d'admission et/ou du mélange air d'admission/ air d'admission - gaz d'échappement étant réglé par la commande des soupapes et en fonction du point de fonctionnement déterminé par la centrale de commande intégrée, et qu'après cela se poursuit, en fonction de l'ordre d'allumage er par cylindre, la combustion du moteur à combustion interne.

13. Procédé suivant la revendication 12, **caractérisé en ce qu'**une exigence fonctionnelle effectuée en régime parallèle de démarrage par la centrale de commande intégrée ne déclenche l'activation du régime parallèle d'arrêt que lorsque la valeur maximale déterminée de la position d'accélérateur dépasse la valeur maximale mémorisée de la capacité du ou des moteur(s) électrique(s).

14. Dispositif de commande d'un décompresseur pour chaque cylindre d'un moteur à combustion interne, où le moteur à combustion interne est commandé par une centrale de commande intégrée et est muni d'une injection de carburant directe, **caractérisé en ce que** la centrale de commande intégrée est dotée d'un microprocesseur qui, lui, est programmé de telle sorte que des donnés d'entrée soient saisies par des capteurs incorporés dans le moteur à combustion interne, ce qui permet tant de déterminer les conditions de fonctionnement du moteur à combustion interne, que d'émettre des consignes pour les actionneurs de réglage, et que la centrale de commande intégrée saisit le régime du moteur à combustion interne déterminé par un capteur de régime afin que le microprocesseur puisse calculer la vitesse maximale à vide qui, outre de servir de consigne, contrôle le flux d'énergie vers le démarreur et commande tant le régulateur d'alimentation en carburant que le décompresseur de chaque cylindre, et qu'à chaque rotation du vilebrequin, la centrale de commande intégrée saisit des données mesurées par des capteurs qui, elles, sont évaluées ensuite par un microprocesseur.

15. Dispositif suivant la revendication 14 destiné à commander un moteur à combustion interne incorporé dans un système d'entraînement hybride, composé d'un bloc-cylindres, de différents cylindres, d'une tubulure d'aspiration et/ou d'un actionneur de réglage pour soupapes (valves) d'admission, et/ou d'un système de conduites de carburant, et/ou d'un actionneur de réglage pour injecteurs, et/ou d'un vilebrequin et/ou d'une unité de capteurs de vitesse de rotation et de position du vilebrequin, et/ou d'un générateur de démarrage, et/ou d'une conduite électrique raccordant le générateur de démarrage à la batterie, et/ou d'une interface moteur à combustion interne / générateur de démarrage, et/ou d'un collecteur d'échappement avec canal d'échappement, et/ou d'un actionneur de réglage pour soupapes d'échappement et/ou injecteurs, et/ou d'un pédale d'accélérateur, et/ou d'accumulateurs d'énergie électrique, et/ou d'un calculateur moteur, et/ou d'un régulateur du débit de carburant, et/ou d'une commande des soupapes et d'une centrale de commande intégrée, et/ou d'un capteur de position du papillon des gaz, et/ou d'un capteur de position de vitesse de rotation ou de position du vilebrequin, et/ou d'un débitmètre massique d'air, et/ou d'un capteur de position du pédale d'accélérateur, et/ou d'un capteur d'état de charge pour accumulateurs d'énergie électrique, et/ou d'un papillon des gaz, **caractérisé en ce que** la centrale de commande intégrée détermine ou saisit, à l'aide d'un capteur, l'état des accumulateurs d'énergie électrique ou la nécessité d'un changement de vitesse, ceci permettant au microprocesseur d'évaluer les données mesurées par les capteurs et d'émettre les consignes respectives aux actionneurs de réglage.
